# EUROPÄISCHE PATENTANMELDUNG

(11) **EP 1 914 469 A1**
(43) Veröffentlichungstag der Anmeldung: **23.04.2008**
(21) Anmeldenummer: 06021780.9
(22) Anmeldetag: 17.10.2006
(51) Int. Cl.: F17C 13/02

(54) **Durchführung durch eine Behälterwand**

(71) Anmelder: Linde Aktiengesellschaft, 80807 München (DE)
(72) Erfinder: Möller, Stefan, 81671 München (DE); Pell, Wolfgang, 81373 München (DE)
(74) Vertreter: Imhof, Dietmar

(57) **Zusammenfassung**

Die Erfindung betrifft eine Durchführung eines lang gestreckten Bauteils (3) durch eine Behälterwand (4), die eine einem Außenraum (6) zugewandte Außenseite und eine einem Innenraum (5) zugewandte Innenseite aufweist. Im Außenraum (6) ist ein gasdichter Balg (8) angeordnet, der in Richtung der Längsachse (2) des lang gestreckten Bauteils (3) dehnbar ist und an seinem der Behälterwand (4) abgewandten Ende über eine erste gasdichte Flanschverbindung (9/11) mit dem lang gestreckten Bauteil (3) und an seinem anderen Ende über einen zweiten gasdichten Flansch (10/12) mit der Behälterwand (4) verbunden ist.

## Beschreibung

Die Erfindung betrifft eine Durchführung eines lang gestreckten Bauteils durch eine Behälterwand, die eine einem Außenraum zugewandte Außenseite und eine einem Innenraum zugewandte Innenseite aufweist. Die Behälterwand dient dazu, den Innenraum, in dem bei tiefen Temperaturen betriebene Bauteile angeordnet sind, von einem Außenraum abzutrennen, in dem höhere Temperaturen herrschen. Ein von derartigen Behälterwänden umschlossener Innenraum beziehungsweise seine Einhausung wird regelmäßig als Coldbox bezeichnet.

Der Außenraum kann durch die Atmosphäre gebildet sein, durch einen anderen Raum, der sich etwa auf Umgebungstemperatur befindet, oder auch durch einen seinerseits gegenüber der weiteren Umgebung isolierten Raum, der sich aber während des Betriebs der Anlage auf einer höheren Temperatur als der Innenraum befindet. (Eine derartige Vorrichtung zur Isolierung kryogener Gaszerlegungsanlagen mit zwei kalten Abteilen unterschiedlicher Temperatur ist in der älteren deutschen Patentanmeldung 102006028313 und den dazu korrespondierenden Anmeldungen beschrieben.)

Der Innenraum wird häufig mit einem Spülgas wie trockenem Stickstoff beaufschlagt sein. Zusätzlich kann er mindestens teilweise mit einen thermisch isolierenden Material, beispielsweise mit einem pulverförmigen Material wie Perlite, gefüllt sein.

Um Ströme ein- oder austreten zu lassen und/oder um Armaturen im Innenraum vom Außenraum her betätigen zu können, müssen langgestreckte Bauteile durch die Behälterwand hindurchgeführt werden. An diesen Stellen müssen entsprechende Durchführungen vorgesehen sein. Dabei ist zu gewährleisten, dass thermisch induzierte Spannungen, insbesondere beim Kaltfahren oder Anwärmen der Anlage zu keinen Schäden führen.

Bestimmte Anlagen werden bei besonders niedrigen Temperaturen betrieben werden, zum Beispiel mit Wasserstoff betriebene Flüssigturbinen. Bei diesen Temperaturen kann nicht mehr mit Stickstoff gespült werden, weil dieser kondensieren würde. Zur Spülung des Behälters muss also ein besonders teures Gas eingesetzt werden, das tiefer als Stickstoff siedet, insbesondere Helium. In diesem Fall bestehen besonders hohe Anforderungen an die Abdichtung der Ventil- und anderen Durchführungen; in manchen Fällen werden Leckraten von weniger als 1 I/h gefordert. Diese Anforderung kann mit den klassischen Maßnahmen zur Ventilabschottung nicht erfüllt werden.

Der Erfindung liegt daher die Aufgabe zugrunde, eine derartige Durchführung so auszubilden, dass sowohl ein Ausströmen von Spülgas aus dem Innenraum in den Innenraum als auch Schäden durch thermische Spannungen im Bereich der Durchführung weitgehend vermieden werden.

Diese Aufgabe durch einen im Außenraum angeordneten gasdichten Balg gelöst, der in Richtung der Längsachse des lang gestreckten Bauteils dehnbar ist und an seinem der Behälterwand abgewandten Ende über eine erste gasdichte Flanschverbindung mit dem lang gestreckten Bauteil und an seinem anderen Ende über einen zweiten gasdichten Flansch mit der Behälterwand verbunden ist.

Der Balg gleicht einerseits mechanische Toleranzen und temperaturinduzierte Längenänderungen des lang gestreckten Bauteils aus; andererseits schottet er den Innenraum des Behälters gasdicht ab und verhindert damit das Ausströmen des Spülgases in nennenswertem Umfang. Der Raum im Innern des Balgs steht dabei in Strömungsverbindung mit dem Innenraum hinter der Behälterwand. Zum Beispiel kann ein im Innenraum befindliches Spülgas auch in den Raum ins Innere des Balgs einströmen.

Unter "gasdicht" wird hier eine Strömung von maximal 1 m³/h, insbesondere maximal 1 l/h, vorzugsweise maximal 0,1 I/h He durch gesamte Balgoberfläche einschließlich der Flansche bei einem Druckunterschied zwischen Innen- und Außenraum von 70 mbar verstanden.

Es ist günstig, wenn der gasdichte Balg als Metallflansch ausgebildet ist. Als Metall wird vorzugsweise mindestens teilweise Cr-Ni-Stahl eingesetzt.

Die erste Flanschverbindung weist vorzugsweise einen ersten Balgflansch und einen Schaftflansch auf, wobei der erste Balgflansch mit dem Balg und der Schaftflansch mit dem lang gestreckten Bauteil verbunden ist und die der Behälterwand zugewandete Seite des ersten Balgflansches mit der der Behälterwand abgewandten Seite des Schaftflansches verbunden ist. Bei der ersten, äußeren Flanschverbindung kann der Balgflansch damit von außen (also vom Außenraum her) auf das bereits eingebaute langgestreckte Bauteil aufgesetzt werden.

Außerdem ist es günstig, wenn die zweite Flanschverbindung einen zweiten Balgflansch und einen Behälterflansch aufweist, wobei der Innendurchmesser des zweiten Balgflansches größer oder gleich dem Außendurchmesser des Schaftflansches ist. Auf diese Weise kann bei der Montage der Zuführung der gesamte Balg über das bereits eingebaute und durch die Behälterwand geführte Bauteil geschoben. Bei einer Betriebsunterbrechung der Anlage kann der Flansch abgenommen und das langgestreckte Bauteil, das in den Innenraum hineinragt, inspiziert werden.

Die erste oder die zweite Flanschverbindung, vorzugsweise beide Flanschverbindungen, können eine O-Ring-Dichtung aufweisen.

Die erste oder die zweite Flanschverbindung, vorzugsweise beide Flanschverbindungen, können verschraubt sein.

Das langgestreckte Bauteil kann als Tieftemperatur-Armatur ausgebildet sein, insbesondere als Antrieb eines Kaltventils, zum Beispiel eines Kalteckventils, oder eines Schiebers.

Alternativ kann das langgestreckte Bauteil auch als Rohrleitung oder Ähnliches ausgebildet sein.

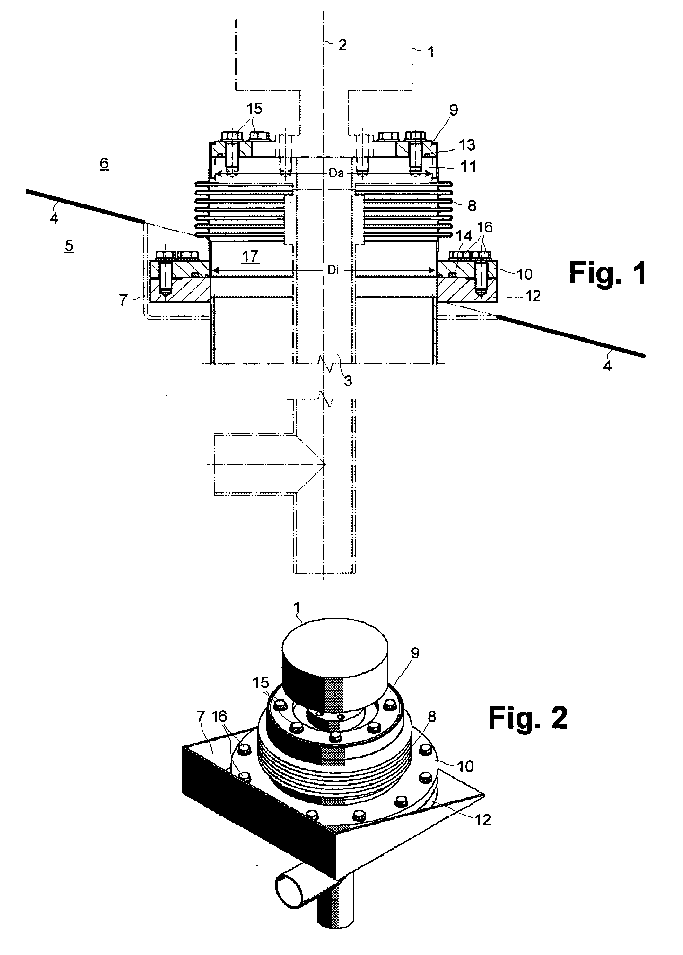

Die Erfindung sowie weitere Einzelheiten der Erfindung werden im Folgenden anhand eines in den Zeichnungen schematisch dargestellten Ausführungsbeispiels näher erläutert. Das Ausführungsbeispiel betrifft eine Kaltventilanordnung, die in Figur 1 im Längsschnitt und in Figur 2 in perspektivischer Ansicht - vom Außenraum gesehen - dargestellt ist.

Das Kaltventil weist eine Ventilspindel als "lang gestrecktes Bauteil" auf, die mit einem Ventilantrieb 1 verbunden ist und auf ihrer dem Ventilantrieb abwandten Seite durch eine Öffnung in einer Behälterwand ins Innere eines Behälters führt. Es kann jeder bekannte Ventilantrieb eingesetzt werden, zum Beispiel ein Handrad, ein elektrischer, pneumatischer oder magnetischer Antrieb. In den Zeichnungen ist die Ventilspindel selbst nicht dargestellt, sondern lediglich in Figur 1 ihre Achse 2 und der sie umgebende Schaft 3, der sich nicht mit der Spindel mitdreht.

Die Achse 2 verläuft in dem Ausführungsbeispiel schräg zur Behälterwand 4, die beispielsweise vertikal ausgerichtet ist (in Figur 2 ist die Behälterwand nicht dargestellt). Die Behälterwand 4 und eine senkrecht zur Achse 2 angeordnete Wanne 7 trennen Innenraum 5 und Außenraum 6

Die erfindungsgemäße Durchführung weist einen gasdichten Balg 8 auf, der als Metallbalg ausgebildet ist. Der Metallbalg weist vorzugsweise eine im Wesentlichen zylindrische Grundform mit gewellter Außenfläche auf, wobei die Wellentäler und - berge auf zwei konzentrischen Zylindermänteln um die Achse 2 verlaufen. Er besteht vorzugsweise Cr-Ni-Stahl und ist in Richtung der Achse 2 dehn- und stauchbar. An seinem dem Außenraum abgewandten Ende (in Figur 1 oben) ist er mit einem ersten, äußeren Balgflansch 9 verbunden, am gegenüber liegenden Ende (in Figur 1 unten) mit einem zweiten, unteren Balgflansch 10. Der erste Balgflansch 9 bildet zusammen mit einem Schaftflansch 11, der mit dem Schaft 3 verbunden ist, die "erste Flanschverbindung". Zweiter Balgflansch 10 und ein Behälterflansch 12, der über die Wanne 7 mit der Behälterwand 4 verbunden ist, bilden die "zweite Flanschverbindung".

Der Innendurchmesser Di des zweiten Balgflanschs 10 ist geringfügig kleiner als der Außendurchmesser Da des Schaftflansches 11. Damit kann bei der Montage der Durchführung zunächst der Ventilschaft (ohne Antriebsrad 1) montiert werden. Anschließend wird die Balgeinheit aus Balg 8 und Balgflanschen 9,10 über den Schaftflansch 11 gezogen, bis der erste Balgflansch 9 auf dem Schaftflansch 11 aufsitzt. Anschließend werden die beiden Flanschverbindungen, die jeweils eine O-Ring-Dichtung 13, 14 aufweisen, mittels Schrauben 15, 16 gasdicht geschlossen.

Das Innere 17 des Balgs 8 steht mit dem Innenraum 5 in Strömungsverbindung. Das im Innenraum zirkulierende Spülgas kann damit auch den aus dem Behälter herausragenden Raum im Inneren des Balgs erreichen, ohne dass eine Strömungsverbindung zum Außenraum existiert.

## Patentansprüche

1. Durchführung eines lang gestreckten Bauteils (3) durch eine Behälterwand (4), die eine einem Außenraum (6) zugewandte Außenseite und eine einem Innenraum (5) zugewandte Innenseite aufweist, **gekennzeichnet durch** einen im Außenraum (6) angeordneten gasdichten Balg (8), der in Richtung der Längsachse (2) des lang gestreckten Bauteils (3) dehnbar ist und an seinem der Behälterwand (4) abgewandten Ende über eine erste gasdichte Flanschverbindung (9/11) mit dem lang gestreckten Bauteil (3) und an seinem anderen Ende über einen zweiten gasdichten Flansch (10/12) mit der Behälterwand (4) verbunden ist.

2. Durchführung nach Anspruch 1, **dadurch gekennzeichnet, dass** der gasdichte Balg (8) als Metallflansch ausgebildet ist.

3. Durchführung nach Anspruch 1 oder 2, **dadurch gekennzeichnet, dass** die erste Flanschverbindung einen ersten Balgflansch (9) und einen Schaftflansch (11) aufweist, wobei der erste Balgflansch (9) mit dem Balg (8) und der Schaftflansch (11) mit dem lang gestreckten Bauteil (2) verbunden ist und die der Behälterwand (4) zugewandete Seite des ersten Balgflansches (9) mit der der Behälterwand (4) abgewandten Seite des Schaftflansches (11) verbunden ist.

4. Durchführung nach Anspruch 3, **dadurch gekennzeichnet, dass** die zweite Flanschverbindung einen zweiten Balgflansch (10) und einen Behälterflansch (12) aufweist, wobei der Innendurchmesser (Di) des zweiten Balgflansches (10) größer oder gleich dem Außendurchmesser (Da) des Schaftflansches (11) ist.

5. Durchführung nach einem der Ansprüche 1 bis 4, **dadurch gekennzeichnet, dass** die erste und/oder die zweite Flanschverbindung eine O-Ring-Dichtung (13, 14) aufweist.

6. Durchführung nach einem der Ansprüche 1 bis 5, **dadurch gekennzeichnet, dass** die erste und/oder die zweite Flanschverbindung verschraubt (15, 16) ist.

7. Durchführung nach einem der Ansprüche 1 bis 6, **dadurch gekennzeichnet, dass** das langgestreckte Bauteil als Tieftemperatur-Armatur ausgebildet ist, und insbesondere den Antrieb eines Kaltventils oder eines Schiebers enthält.

8. Durchführung nach einem der Ansprüche 1 bis 6, **dadurch gekennzeichnet, dass** das langgestreckte Bauteil als Rohrleitung ausgebildet ist.
